# EUROPEAN PATENT APPLICATION

(11) **EP 3 188 021 A1**
(43) Date of publication of application: **05.07.2017**
(21) Application number: 16205826.7
(22) Date of filing: 21.12.2016
(51) Int. Cl.: G06F 11/14

(54) **METHOD AND DEVICE FOR SAVING DATA**

(30) Priority: 30.12.2015 WO PCT/CN2015/099643
(71) Applicant: Thomson Licensing, 92130 Issy-les-Moulineaux (FR)
(72) Inventor: WANG, Yonggang, BEIJING, Beijing 100192 (CN); LI, Zhiyi, BEIJING, Beijing 100192 (CN); YANG, Qinglei, BEIJING, Beijing 100192 (CN); SUN, Yi Qiang, BEIJING, Beijing 100192 (CN)
(74) Representative: Huchet, Anne

(57) **Abstract**

It is provided a method for backing up data stored in a portion of a volatile memory, comprising: allocating, in a Flash memory, two memory zones with equal size alternately working as active memory zone and backup memory zone, wherein each memory zone comprises a basic data region, a header region and an update data region; a size of the basic data region is equal to a size of the portion of the volatile memory; when switching between the two memory zones for working as active memory zone, storing a copy of the data in the portion of the volatile memory into the basic data region of the active memory zone and storing integrity data for the data stored in the basic data region in the header region; and if there is a change to data in the portion of the volatile memory, storing the change in the update data region of the active memory zone.

## Description

### TECHNICAL FIELD

The present disclosure relates to data storage, and particular to a method and a device for saving data.

### BACKGROUND

Currently, a variety of embedded devices are popular in industrial applications and consumer electronics. Usually, in an embedded device, besides the volatile RAM (Random Access Memory), e.g., SRAM, DRAM, SRAM and the like, for caching the parameters required during the operation of the processor/controller, there is a Non-Volatile RAM (NVRAM), such as EEPROM so as to save data/parameters permanently upon power-off. In order to reduce the cost of the embedded product, it has been proposed to emulate the NVRAM by using a Flash memory, such as a NOR Flash, so that all the data in the volatile RAM can be backup in the NOR flash rather than in the NVRAM, such as EEPROM.

Although there are many solutions to emulate NVRAM, such solutions have common disadvantages, for example, it is difficult for them to emulate the NVRAM with a big size due to the complex logic or unreliable performance.

Further, the existing solution can not be adapted to the requirements on the NVRAM emulation with different sizes and/or to the different types of Flash memory flexibly, either due to the complex logic for writing/reading or to the high risk introduced to the product.

Moreover, the existing solution either takes no consideration of balancing the wear level of respective sectors of the Flash memory or uses a complicated algorithm to roughly equalize the erasing of the Flash sectors.

### SUMMARY

According to one aspect of the present disclosure, it is provided a method for backing up data stored in a portion of a volatile memory, comprising: allocating, in a Flash memory, two memory zones with equal size alternately working as active memory zone and backup memory zone, wherein each memory zone comprises a basic data region, a header region and an update data region; a size of the basic data region is equal to a size of the portion of the volatile memory; when switching between the two memory zones for working as active memory zone, storing a copy of the data in the portion of the volatile memory into the basic data region of the active memory zone and storing integrity data for the data stored in the basic data region in the header region; and if there is a change to data in the portion of the volatile memory, storing the change in the update data region of the active memory zone.

According to another aspect of the present disclosure, there is provided a device for saving data in a portion of a volatile RAM, wherein the device comprises: a flash memory; the volatile RAM; and a processor that is used for allocating, in the Flash memory, two memory zones with equal size alternately working as active memory zone and backup memory zone, wherein each memory zone comprises a basic data region, a header region and an update data region; a size of the basic data region is equal to a size of the portion of the volatile RAM; storing, during a switch between the two memory zones for working as active memory zone, a copy of the data in the portion of the volatile RAM in the active memory zone and storing CRC codes for the data stored in the basic data region in the header region; and if there is a change to data in the portion of the volatile RAM, storing the change in the update data region of the active memory zone.

According to another aspect of the present disclosure, there is provided a computer readable medium storing program code instructions which cause a computer to implement the method for saving data from a volatile RAM as described above.

These and other aspects, features and advantages of the present disclosure will become apparent from the following detailed description of exemplary embodiments, which is to be read in connection with the accompanying drawings.

### BRIEF DESCRIPTION OF THE DRAWINGS

The present disclosure may be better understood when reading the description as follows with reference to the following accompanying figures, in which:
Fig. 1 illustrates a schematic diagram of an inventive concept of the present principle;
Fig. 2 schematically illustrates a structure of one data record in the update data region of the memory zone according to an embodiment of the present principle;
Fig. 3 schematically illustrates a flowchart of a method for saving data from a volatile RAM according to an embodiment of the present principle;
Fig. 4 schematically illustrates a flowchart of an initialization process of the volatile RAM according to an embodiment of the present principle;
Fig. 5 schematically illustrates a flowchart of a selection process of an active memory zone according to an embodiment of the present principle;
Fig. 6 schematically illustrates a flowchart of a data loading process of the volatile RAM according to an embodiment of the present principle;
Fig. 7 schematically illustrates a flowchart of a switching process of the active memory zone among at least two memory zones according to an embodiment of the present principle;
Fig. 8 schematically illustrates a flowchart of a data reading process of the volatile RAM according to an embodiment of the present principle;
Fig. 9 schematically illustrates a flowchart of a data writing process of the active memory zone according to an embodiment of the present principle;
Fig. 10 schematically illustrates a flowchart of an updating process of one data record according to an embodiment of the present principle; and
Fig. 11 illustrates a schematic diagram of a device for saving data from a volatile RAM according to an embodiment of the present principle.

### DETAILED DESCRIPTION

To illustrate the technical solutions of the present disclosure clearly and fully, hereinafter, detailed description will be made to the embodiments of the present disclosure with reference to the accompanying drawings. It should be appreciated that those skilled in the art will be able to devise various arrangements that, although are not explicitly described or illustrated herein, embody an inventive concept of the present disclosure and thus are intended to fall into the scope of the present disclosure.

In the present disclosure, it is proposed a solution for backing up the data stored or existing in a volatile RAM according to the present principle, which can be applied to emulate a NVRAM by using a Flash memory, so as to reduce the cost of NVRAM without introducing complex logic.

According to an inventive concept of the present principle, a Flash memory is adopted to emulate a NVRAM such as EEPROM so as to save the data stored in a volatile RAM permanently upon the power-off. In particular, the Flash memory is divided into at least two memory zones, for example, memory zone A, memory zone B and memory zone C with equal size, wherein one of the memory zones A, B, C can be selected as an active memory zone, others are set as backup memory zones; the active memory zone is switched among the memory zones A, B, and C by turns.

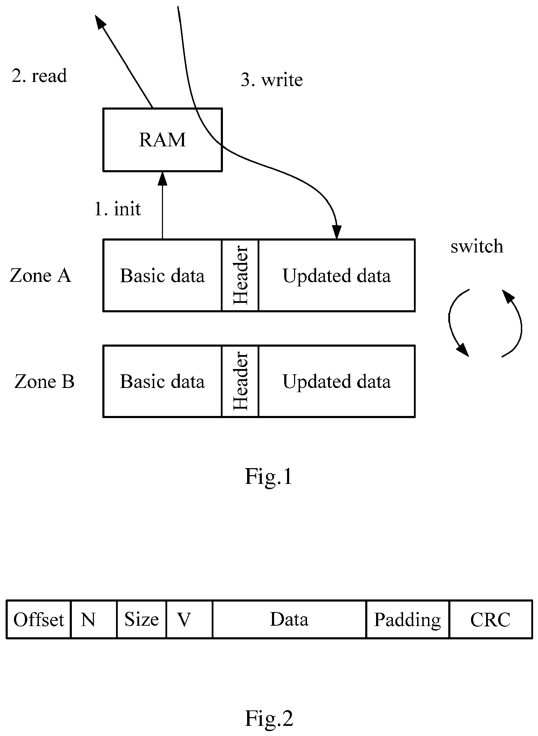

Fig. 1 illustrates a schematic diagram of an inventive concept according to an embodiment of the present disclosure. As illustrated in Fig. 1, a memory block is assigned in the volatile RAM so that the size of the assigned memory block equals to the size of the NVRAM to be emulated; the memory block is used to cache data loaded from the Flash for being accessed by NVRAM API. According to the present principle, the Flash memory is divided into at least two memory zones, and for simplifying the description, Fig. 1 only illustrates two memory zones, i.e., memory zone A and memory zone B with equal size, wherein one memory zone can be selected as an active memory zone, and the other is set as a backup memory zone; the active memory zone is switched among the memory zones A and B, that is, memory zone A and memory zone B are backup for each other to keep data integrity.

Optionally, as illustrated in Fig. 1, each of memory zones has three regions (or called data fields), i.e., a basic data region, a header region and an update data region.

Optionally, the basic data region has a size equal to the size of the volatile RAM (i.e., the size of the NVRAM to be emulated), and maintains a static image of the volatile RAM. When the active memory zone is switched, all the data in the volatile RAM is copied to the basic data region of the memory zone which is selected as the active memory zone.

Optionally, the header region keeps CRC (Cyclic Redundancy Check) codes and metadata for the data saved in the basic data region, wherein the CRC codes are used to keep the integrity of the data saved in the basic data region and in the header (the basic data region and the header generally traverse 2 or more sectors in the flash), and the metadata records information on the performance of the memory zone, for example, the metadata can be used for recording the number of times for which the sectors of memory zone have been erased. In an example, the size of the header region is 32 bytes. Naturally, the size of the header region can be adaptive according to the actual project requirements.

Optionally, the update data region keeps a dynamic image of the volatile RAM; in other words, after a memory zone is selected as a current active memory zone, if there is a change to the data in the volatile RAM, the data subjected to the change (i.e. the data describing the change) is recorded in the update data region of the current active memory zone. Herein, in an example, when a user makes a change, the device may write data or value of parameter(s) to the RAM or change data in the RAM. The device checks if the new data or value is the same as the old value in the RAM. If yes, there is no change. If not, the new data or value is written to the RAM, and a data record describing the new data is stored in the update data region. Below is an example of data structure of the data record.

```
 ---------+---+---------+---+--------------+-----+-------+
 |offset |'N'| size |'V'| data |pad| CRC32|
 ---------+---+---------+---+-----------------------+-----+--------+
 |<--- record header -->|
 /* header of each record */
 typedef struct _nv_record_header
 {
     unsigned char offset[3]; // offset from begin of nvram
     unsigned char flag_N; // flag is always 'N'
     unsigned char size[3]; // data size
     unsigned char flag_V; // flag is always 'V'
     }_nv_record_header_t;
```

Optionally, the size of the update data region can be determined and set based on the project requirements, such as, the number of the backup memory zones, the number of times for which the sector of the Flash memory can be erased, the frequency for which the data in RAM is modified, the size of the data to be modified at a time, or the like.

Fig. 2 schematically illustrates the structure of one data record in the update data region of the memory zone according to an embodiment of the present principle, wherein one data record refers to one or more pieces of data which is subject to a change at a time and is located in a continuous address space in the volatile RAM.

As illustrated in Fig. 2, the structure of one data record in the update data region comprises at least of an offset field, a size field, a data field, and a CRC field.

Optionally, the offset field indicates the address offset from a basic address of the volatile RAM, the size field indicates the size of data which is modified at a time, the data field indicates the modified data, and the CRC field is used to keep the integrity of the modified data.

Dependent on the actual situation, the data structure utilized in the update data region can further include a padding field, and the padding field is intended to adapt to different types of Flash. For example, most of Flash only supports four-bytes writing, if the size of the data to be written into the Flash is not the multiple of the four-bytes, the padding data in the padding field can be used to align the end of the data with the four-byte border. In such a case, the padding field can be 0 to 3 bytes. The utilization of the padding field improves the compatibility of the present principle with the different types of Flash. Optionally, data 0xFF can be used as the padding data in the padding field.

Optionally, the data structure can include 'N' field and 'V' field, and such two fields indicates fixed values for char 'N' and 'V'. They help the API to quickly determine whether the subsequent data record is valid. If the data in the fields "N" or "V" is incorrect, it can be directly determined that the subsequent data record is invalid without resorting the CRC field in the data structure to judge the validation of the data record.

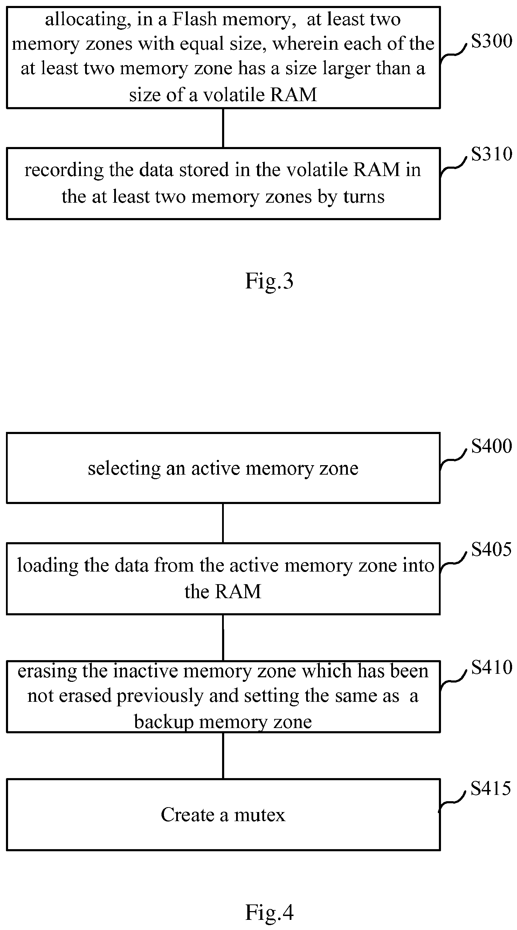

According to one aspect of the present principle, it is provided a method for saving data from a volatile RAM. As illustrated in Fig. 3, the method includes: S300, allocating, in a Flash memory, at least two memory zones with equal size, wherein each memory zone has a size larger than a size of the volatile RAM; and S310, recording the data stored in the volatile RAM in the at least two memory zones by turns.

Hereinafter, a case in which the Flash memory is divided into two memory zones, i.e., the memory zone A and the memory zone B, is taken as an example for illustrating the present principle. The case in which the Flash is divided into more than two memory zones is similar to the case of two memory zones, and the difference is mainly in that more than one memory zone can be used as the backup memory zones, thus the details thereof being omitted for the purpose of concise and clarity.

For the two memory zones, all the sectors in one memory zone need to be erased together, and the data in one memory zone should be kept integrate before erasing the other one, thus ensuring the safety and integrity of the data. In such a way, it avoids the bugs due to the erasing of data crosses Flash sector border, and thus keeps the logic to be implemented clear and easy; further, only one of the two memory zones is activated as the active memory zone, and the other one is inactive, and both memory zones back up for each other.

Further, for the reading/writing operation for the data in the RAM, the present principle uses one mutex in API, thus avoiding the issues due to the internal thread and semaphores normally used in the known solution, such as complex logic, the unreliable data storage, and the like.

As mentioned above, compared to the known embedded device using a NVRAM, such as EEPROM, to save the data permanently upon power-off, the solution of the present principle does not use a physical NVRAM but uses partial space in Flash, such as NOR Flash, to emulate the NVRAM to reduce the cost.

According to the method illustrated in Fig. 3, an embedded device can use partial Flash memory to replace NVRAM to save the data permanently upon power-off, wherein the RAM is used to cache data from the Flash for being accessed by a NVRAM API, and the size of RAM is equal to or larger than the size of the NVRAM to be emulated; the space of the Flash can be divided into two memory zones, for example, memory zone A and memory zone B with equal size, and the size of each memory zone is larger than the size of the NVRAM to be emulated.

For the purpose of simplifying the description, assuming that at the very beginning, original data, e.g., parameters are stored in the memory Zone A, and the memory zone A is selected as the active memory zone; during an initialization of the RAM, the parameters are loaded from the memory zone A to the RAM. After that, upon detection of a change to data in the RAM, the changed data is recorded in the memory zone A until there is not enough free space to record the data; then, the active memory zone is switched from the memory zone A to the memory zone B, that is, the memory zone B is activated as the active memory zone, and all the data in the RAM at this point are copied to the memory zone B as the static mapping of the RAM, and the memory zone B begins to record the subsequent change to the data of the RAM as the dynamic mapping of the RAM, while the memory zone A is erased. A similar process is conducted if the memory zone B has no enough free space for recording the changed data from the RAM.

By using the memory zone to record the changed data (e.g. by adding a data record describing the change in the update data field) upon detection of a change to the data in the RAM instead of all the data in the RAM, the storage space in the memory zone can be saved and the recording speed can be improved; meanwhile, by using the static mapping of the RAM and the dynamic mapping of the RAM, all the current data in the RAM is saved in the Flash memory.

Further, the memory zone A and memory zone B are backup for each other to save the data from the RAM alternatively, so that all the sectors in the Flash memory will have the equal erasing opportunity, and the wearing level is balanced among all the sectors without complex logic, thus extending the lifespan of the Flash.

Fig. 4 schematically illustrates a flowchart of an initialization process of the RAM according to an embodiment of the present principle. As illustrated in Fig. 4, the initialization includes: S400, selecting an active memory zone; S405, loading the data from the active memory zone into the volatile RAM; S410, erasing the inactive memory zone which has been not erased previously and setting the inactive memory zone as a backup memory zone; S420, creating a mutex.

As mentioned above, each of memory zones has three regions, i.e., a basic data region, a header region and an update data region, wherein the size of the basic data region is equal the size of the RAM, and the header region keeps CRC(Cyclic Redundancy Check) codes and metadata for the data saved in the basic data region.

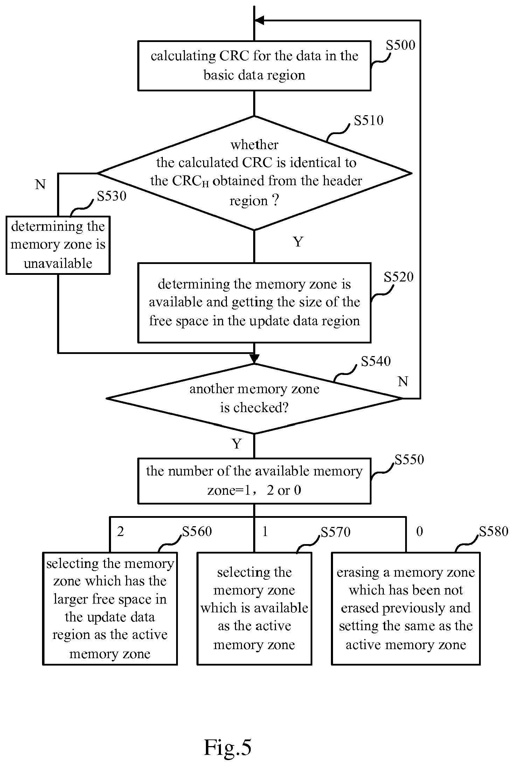

Optionally, as illustrated in Fig. 5, the selection of the active memory zone can be as follows: for S500, calculating CRC for the data in the basic data region of a memory zone; S510, determining whether the calculated CRC is identical to the CRC_{H} obtained from the header region of the memory zone; if both are identical, proceeding to 520, determining the memory zone is available and getting the size of the free space in the update data region of the memory zone, and then repeating S500-S510 until all the memory zones are checked; otherwise, proceeding to S530, determining the memory zone is unavailable, and then repeating S500-510 for a next memory zone until all the memory zones are checked; then, proceeding to S550, determine the number of the available memory zones, and branching to S560, S570 or S580 according to the number of the available memory zones; at S560, selecting the memory zone which has the largest free space in the update data region as the active memory zone if there are more than one memory zone available; at S570, selecting the memory zone which is available as the active memory zone; if no memory zone is available, at S580, erasing one of the memory zones which has not erased previously and selecting the same as the active memory zone.

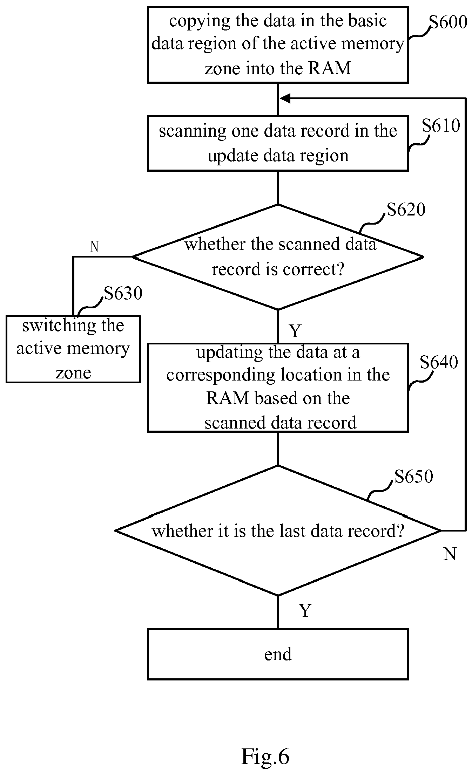

Fig. 6 schematically illustrates a flowchart of a data loading process of the volatile RAM according to an embodiment of the present principle. As illustrated in Fig. 6, the data loading process includes: S600, copying the data from the basic data region of the active memory zone into the volatile RAM; S610, scanning one data record in the update data region; S620, determining whether the scanned data record is correct; if incorrect, proceeding to S630, switching the active memory zone; otherwise, at S640, updating the data at a corresponding location in the RAM based on the scanned data, and proceeding to S650, determining whether it is the last data record; if not, repeating the above steps.

As discussed above, the CRC field in the data structure of the update data region can be used to determine whether the data record in the update data region is correct. Further, the fields 'N' and 'V' can also be used to assist determining whether the scanned data record is correct, that is, if the data in the fields "N" or "V" is incorrect, it can be directly determined that the scanned data record is invalid without checking CRC any more.

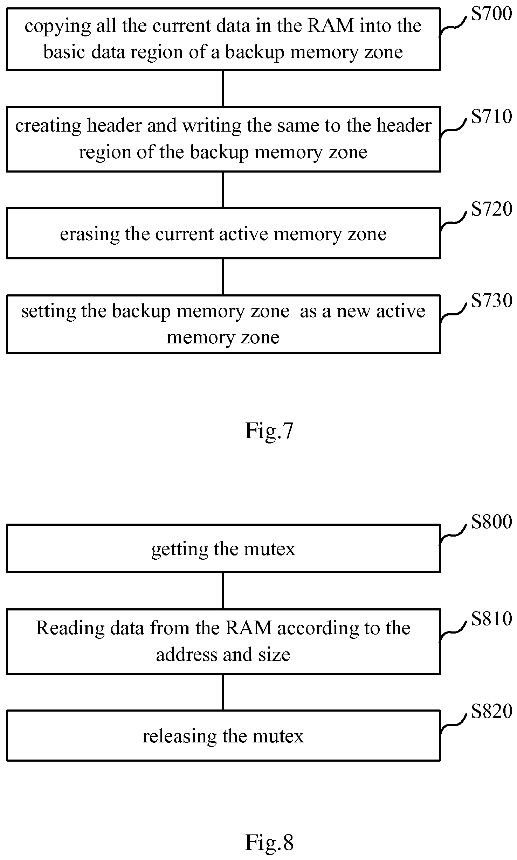

Fig. 7 schematically illustrates a flowchart of a process of switching the active memory zone among two memory zones according to an embodiment of the present principle. As illustrated in Fig. 7, the switching process includes: S700, copying all the current data from the volatile RAM into the basic data region of a backup memory zone; S710, creating header and writing the same to the header region of the backup memory zone B; then proceeding to S720, erasing the current active memory zone; and then at S730, setting the backup memory zone B as a new active memory zone.

For the process of reading from/writing into the RAM, the present principle proposes creating only one mutex in API to avoid the conflict and ensure operation safety during multi-task access. Only if the mutex is obtained, it is possible for API to read/write data from/into the RAM.

Fig. 8 schematically illustrates a flowchart of a data reading process of the volatile memory according to an embodiment of the present principle. As illustrated in Fig. 8, the reading process includes: S800, getting the mutex; S810, reading data from the volatile RAM according to the address and size; and S820, releasing the mutex.

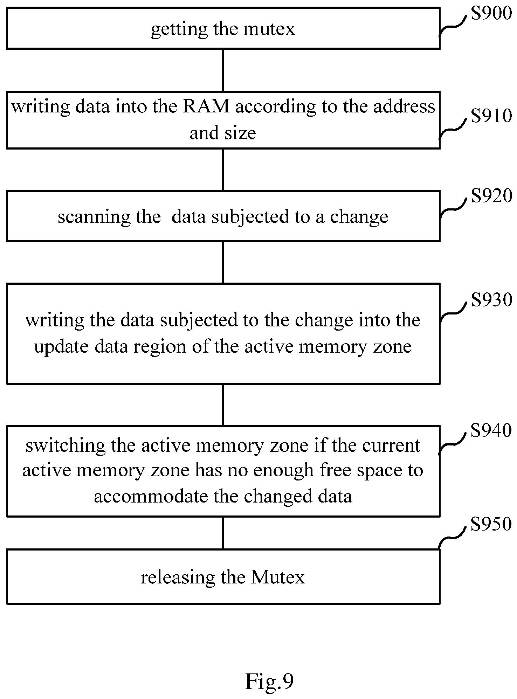

Fig. 9 schematically illustrates a flowchart of a data writing process of the active memory zone according to an embodiment of the present principle. As illustrated in Fig. 9, the writing process includes: S900, getting the mutex; S910, writing data into the RAM according to the address and size; S920, scanning the data subjected the change; S930, writing the data subjected to the change into the update data region of the active memory zone if the active memory zone has enough free space to accommodate the changed data; otherwise, at S940, selecting a backup memory zone as a new active memory zone; S950, releasing the Mutex.

Optionally, in order to reduce the number of times for which the sectors of the Flash are erased, the principle proposes that after the API writes a data block into the RAM, the API scans the data block to determine whether the data block has an identical portion to the previous data block at the same location in the RAM. In particular, the API scans the data block from the beginning of the data block to determine a starting position at which data is modified, and scans the data block from the ending of the data block to determine an ending position at which data is modified; then, only a data portion between the starting position and the ending position needs to be written to the update data region of the active memory zone. In such a way, the space of the update date region can be saved, and thus the number of times for which the memory zone is erased can be reduced, extending the lifespan of the Flash.

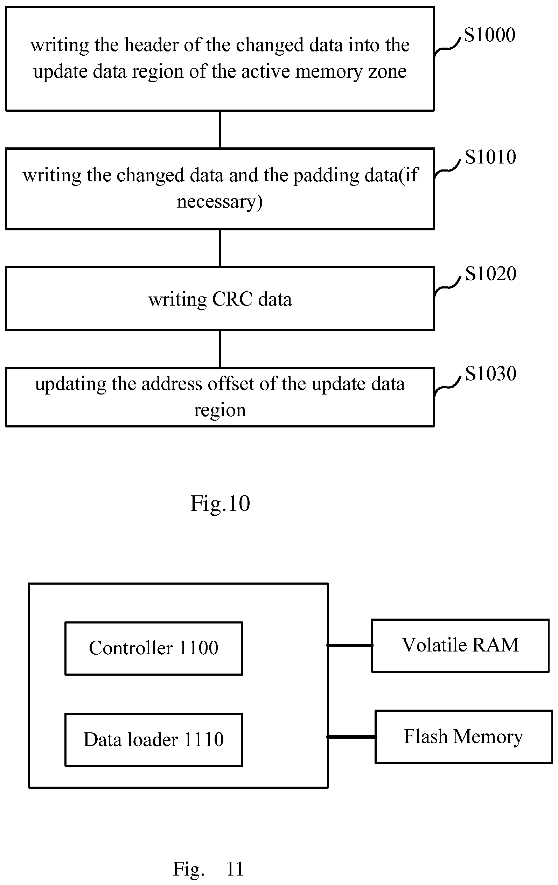

Fig. 10 schematically illustrates a flowchart of an updating process of one data record in the active memory zone according to an embodiment of the present principle. As illustrated in Fig. 10, the data updating process includes: S1000, writing the header of the changed data, such as the fields "N", "V", offset, size, into the update data region of the active memory zone according to the address offset in the update data region; S1010, writing the changed data and the padding data(if necessary) into the location which immediate follows the header location in update data region; S1020, writing CRC data following the padding data(if necessary) into the update data region; S1030, updating the address offset of the update data region of the active memory zone.

Although the respective data process are illustrated in Figs. 3-10, it should be noted that the element/block therein are only illustrative not limiting, one or more of them can be omitted or the executing sequence can be adjusted according to the actual requirement. Therefore, such description or illustration should not be construed to limit the scope of the present principle in any way.

Optionally, in order to adapt to emulate a variety of NVRAM with different sizes by different types of Flash more flexibly, the setting parameters, such as the parameters concerning the size of the NVRAM to be emulated, the size of the update data region of the memory zone, the starting address of the basic data region of the memory zone in the Flash, the sector size of the Flash and the like, can be defined as macro parameters so as to improve the flexibility and compatibility of the application of the present principle.

According to the present principle, a Flash memory such as NOR Flash, can be adopted to emulate the NVRAM such as EEPROM with simple and reliable logic, and it is possible to remove the NVRAM from an embedded device, thus reducing the product cost.

Moreover, according to the present principle, two memory zones of the FLASH are used for data integrity, so that all the data in the RAM can be saved into the two memory zones alternatively, and the sectors of the Flash would have the equal erasing opportunity, thus extending the lifespan of the Flash.

Further, the solution according to the present principle can easily support the requirement for different NVRAM sizes, and it only needs to adapt the size of the Flash to the size of the NVRAM to be emulated.

Further, according to the present principle, it is possible to analyze the life cycles of the emulated NVRAM quantitatively. For example, for each data record in the update data region of the memory zone, each of the offset field and the size field occupies 3 bytes, each of "N" and "V" fields 1 bytes, and the padding field 3 bytes at most, and the CRC field 4 bytes; if 32K NVRAM needs to be emulated, and assuming that max length of the data record to be written to the update data region at a time is N, the number of the data records which can be accommodated in the update data region will be 32K/(15+N) data records; in consideration of one-time data copy from the volatile RAM to the basic region of the memory zone upon the switching of the active memory zone, before one memory zone is erased, the memory zone can be allowed to be written up to the number of times (32K/(15+N)+1); assuming the sector of the Flash allows to be erased 100,000 times, two memory zones will be allowed to be written up to the number of times (32K/(15+N)+1)*2*100,000. In other words, the life cycles of the emulated NVRAM can be analyzed quantitatively.

Moreover, for the power-down exception, the solution according to the present principle can decrease the possibility of the data lost as much as possible. For example, for an operation of writing a data record into the update data region of the active memory zone, if power-down occurs during the writing operation, only the data record being written might be lost upon an initialization of the RAM since the CRC of the data record might be incorrect, no other data records missing. For the case in which the power-down occurs before or after the writing operation, no data record is lost.

For an operation of switching the active memory operation, if the power-down occurs before switching sector, no data record is lost; if the power-down occurs during the operation of copying data from the volatile RAM into the basic data region of the backup memory zone, the CRC for basic data in the backup memory zone might be incorrect, and the backup memory zone will be erased upon an initialization of the RAM, while the data in the active memory zone will be loaded into the volatile RAM, and thus the last data record which triggers the switching of the memory zone will be dropped, and no other data is lost; if the power-down occurs after copying the data from the volatile RAM to the basic data region of the backup memory zone and before erasing another memory zone, the CRCs for both memory zones are correct, the memory zone having a larger free space in the update data region is selected as the active memory zone upon an initialization of the RAM, and the full memory zone will be erased, no data is lost; if the power-down occurs during the operation of erasing the full memory zone, the CRC for the full memory zone might be incorrect, it will be erased upon an initialization of the RAM, while the CRC for another memory zone is correct, and no data is lost; for the last case, if the power-down occurs after erasing the full memory zone, no data lost.

It can be seen that the solution of principle can endure the power-down exception and reduce the possibility of the data lost as much as possible without complex logic.

According to another aspect of the present principle, there is provided a device for saving data from a volatile RAM into a Flash memory. As illustrated in Fig. 11, the device comprises: a controller 1100 configured to allocate, in a Flash memory, two memory zones with equal size, wherein each memory zone has a size larger than a size of the volatile RAM; a data loader 1110 configured to load the data stored in the volatile RAM into the two memory zones alternatively.

According to an embodiment of the present principle, the device as described above can be used to emulate a NVRAM such as EEPROM, wherein the size of each of two memory zone is larger the size of NVRAM to be emulated.

Optionally, the controller is further configured to select one of two memory zones as an active memory zone, and to switch the active memory zone among the two memory zones.

Optionally, the data loader is further configured to copy the data from the volatile RAM to the active memory zone until the active memory zone has no enough free space to accommodate the data.

Optionally, the controller is configured to allocate in each of the two memory zones, a basic data region, a header region and an update data region, wherein the size of the basic data region is equal to the size of the NVRAM to be emulated.

Optionally, the data loader is configured to load all the data from the RAM into the basic data region of a backup memory zone upon the switching of the active memory zone.

Optionally, the data loader is further configured to only load the data subjected to a change from the RAM into the update data region of the active memory zone if the data in the volatile RAM is subjected to a change.

Optionally, the controller is further configured to select a backup memory zone as a new active memory zone if the current active memory zone has no enough free space in the update data region to accommodate the changed data.

Optionally, the controller is configured to select the memory zone whose basic data region has correct CRC codes and whose update data region has a maximum free space as the active memory zone upon the selection of the active memory zone.

Optionally, the data loader is configured to load the data saved in the basic data region of the active memory zone into the RAM, and update the data loaded into the RAM in consideration of the data saved in the update data region of the active memory zone upon an initialization of the volatile RAM.

According to another aspect of the present principle, it is provided a computer program product downloadable from a communication network and/or recorded on a medium readable by computer and/or executable by a processor, comprising program code instructions for implementing the steps of a method as aforementioned.

According to one aspect of the present principle, it is provided Non-transitory computer-readable medium comprising a computer program product recorded thereon and capable of being run by a processor, including program code instructions for implementing the steps of a method as aforementioned.

As readily conceived by one of ordinary skill in the art, the teachings of the present disclosure may be implemented in various forms of hardware, software, firmware, special purpose processors, or combinations thereof.

Optionally, the above method can be applied to save data in a portion of the RAM instead of the whole RAM. It is because we don't need to save all data of the RAM into Non-volatile memory in some situations.

Optionally, the teachings of the present disclosure are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

The embodiments of the invention being thus described, it will be obvious that all the embodiments may be varied in many ways. Such variations should not be regarded as a departure from the scope of the invention, and all such modifications as would be obvious to those skilled in the art are intended to be included within the scope of the following claims.

## Claims

1. A method for backing up data stored in a portion of a volatile memory, comprising:
allocating, in a Flash memory, two memory zones with equal size alternately working as active memory zone and backup memory zone, wherein each memory zone comprises a basic data region, a header region and an update data region; a size of the basic data region is equal to a size of the portion of the volatile memory;
when switching between the two memory zones for working as active memory zone, storing a copy of the data in the portion of the volatile memory into the basic data region of the active memory zone and storing integrity data for the data stored in the basic data region in the header region; and
if there is a change to data in the portion of the volatile memory, storing the change in the update data region of the active memory zone.

2. The method of claim 1, further comprising incurring a switch between the two memory zones if there is no enough free space in the update data region of the active memory zone for storing the change.

3. The method of claim 1, further comprising upon an initialization of the volatile RAM, loading the data in the basic data region of the active memory zone into the portion of the volatile memory, and updating the data in the portion of the volatile memory with changes in the update data region of the active memory zone.

4. The method of claim 1, further comprising upon the selection of the active memory zone, the memory zone whose basic data region has correct integrity data and whose update data region has a maximum free space is selected as the active memory zone.

5. A device for backing up data stored in a portion of a volatile memory, wherein the device comprises:
a flash memory;
the volatile memory; and
a processor that is used for allocating, in the Flash memory, two memory zones with equal size alternately working as active memory zone and backup memory zone, wherein each memory zone comprises a basic data region, a header region and an update data region; a size of the basic data region is equal to a size of the portion of the volatile memory; storing, when switching between the two memory zones for working as active memory zone, a copy of the data in the portion of the volatile memory into the basic data region of the active memory zone and storing integrity data for the data stored in the basic data region in the header region; and if there is a change to data in the portion of the volatile memory, storing the change in the update data region of the active memory zone.

6. The device of claim 5, wherein the processor further used for incurring a switch between the two memory zones if there is no enough free space in the update data region of the active memory zone for storing the change.

7. The device of claim 5, wherein the processor further used for upon an initialization of the volatile memory, loading the data in the basic data region of the active memory zone into the portion of the volatile memory, and updating the data in the portion of the volatile memory with changes in the update data region of the active memory zone.

8. The device of claim 5, wherein the processor further used for upon the selection of the active memory zone, the memory zone whose basic data region has correct integrity data and whose update data region has a maximum free space is selected as the active memory zone.
